# EUROPEAN PATENT APPLICATION

(11) **EP 2 178 244 A1**
(43) Date of publication of application: **21.04.2010**
(21) Application number: 08783960.1
(22) Date of filing: 13.08.2008
(51) Int. Cl.: H04L 12/14

(54) **A METHOD AND DEVICE FOR MERGING BILL AND SAVING THE STATE OF THE BUFFER QUEUE**

(30) Priority: 23.08.2007 CN 200710146145
(71) Applicant: Huawei Technologies Co., Ltd., Shenzhen, Guangdong Province 518129 (CN)
(72) Inventor: LI, Changzhen, Guangdong Province 518129 (CN); WANG, Qi, Guangdong Province 518129 (CN)
(74) Representative: Pfenning, Meinig & Partner GbR
(86) International application number: PCT/CN2008/071967
(87) International publication number: WO 2009/026819

(57) **Abstract**

A method and device for saving the state of the buffer queue, and a method and device for merging bill, the said method for saving the state of the buffer queue comprises: distributing a bill identifier (ID) in advance for each bill which needs to wait in bill group of the buffer queue, saving the bill ID of the bill added recently into the buffer queue in the bill ID queue; saving the bill information of the bill added recently in the buffer queue as a temporary bill file, saving the bill ID queue as an ID queue file. When saving the state of the buffer queue by using the present invention, only the bill ID queue is updated and the bill added recently in the buffer queue is saved, the buffer queue doesn't need to be saved entirely, so the time for processing the bill is reduced, and the processing rate for merging the bill is quickened.

## Description

The present application claims priority to Chinese Patent Application No. 200710146145.2, entitled "METHOD AND APPARATUS FOR MERGING BILLS AND STORING STATE OF BUFFER QUEUE STATE", filed with Chinese Patent Office on August 23, 2007, which is incorporated herein in its entirety.

### FIELD OF THE INVENTION

The present invention relates to the bill processing technique, and particularly to a method for merging bills and storing state of buffer queue in bill merging system and an apparatus thereof.

### BACKGROUND OF THE INVENTION

In the second-generation mobile communications network, a user may possibly have one call for a long time or occupies network resource for a long time via General Packet Radio Service (GPRS). In this case, a service system provides a plurality of partial bills for the user at intervals of a certain period of time. Therefore, the plurality of partial bills is generated during one call or one online. For the purpose of obtaining an explicit bill, these bills should be merged into one bill as far as possible and displayed to the user. The plurality of partial bills during one call or one online, which is generated by the same device, is in the same format. Therefore, the partial bills are merged directly and displayed on the bill of the user in a form of one bill, for the user's query.

However, partial bills from different devices cannot be merged due to their different formats. In the below, the merging of a bill of an IP Multimedia Subsystem (IMS) and a bill of a General Packet Radio Service (GPRS) in the third-generation mobile communications system is taken as an example.

The third-generation mobile communications system supports the IMS. The IMS is a part of the core network of the 3G system. In the IMS, the session initiation capability of a Session Initiation Protocol (SIP) is used to establish an end-to-end session, and required quality of service is therefore achieved. The IMS separates the control from the bearer, a Packet-Switched domain (PS) core network provides the bearer of SIP signaling and media data, the IMS core part provides the control of session and service, and therefore, a user which accesses the PS in various access methods can share various voice, data and multimedia services as well as new application services provided by operators via a merged core network.

The hierarchy of the IMS generally includes three layers: a control layer, an application layer and an access layer. The access layer is configured to implement the access of an IMS terminal. The control layer does not provide any service but only provide indispensable functions of trigger, routing, billing, etc., for a service layer. In the control layer, the Call Session Control Function (CSCF) module accomplishes the functions of calling a gateway, triggering a call service and route selection, and forwards a SIP signaling message to an application server properly. The application layer supports various kinds of application servers and is responsible for providing multimedia service for users. The application layer exists independent of the access layer and the control layer of the network and ensures the independency of service development and provision. Due to the hierarchy of IMS, an IMS session management entity (such as the CSCF) is not aware of the traffic of an IMS session on the application layer, and an IP connection entity (such as GGSN) is not aware of the state of signaling on the control layer of IMS. The operator desires to charge concentratedly by associating charging data of the application layer and the control layer.

In the IMS hierarchy, the Go reference point is configured to interchange and store an IMS Charging Identifier (ICID) of SIP signaling of a service and GPRS Charging Identifier (GCID) of an IP stream of the service. Particularly, the GCID is added to an IMS bill and the ICID is added to a GPRS bill to obtain association information, thereby implementing charging association of the IP stream and the SIP signaling.

In the conventional art, bills that need to be merged come from different devices, which generate associated bills at different time and transmit the bills to a bill merging system for merging at different time. In order to avoid a synchronization issue occurred at the time of bill merging, a bill first arrived is stored in a buffer queue of a memory, and waits for subsequent bills. The bill is merged into the subsequent bills after all the subsequent bills arrive. In the procedure for waiting, the buffer queue occupies a large storage space. Also, the buffer queue needs to be stored in a real-time manner after each file including a plurality of bills is processed, i.e., the state of the buffer queue is stored in a permanent storage such as a magnetic disk. Because the buffer queue is stored completely after each processing of a file, the buffer queue includes a plurality of bills. The capability of the buffer queue is very large, usually up to tens of MBs to hundreds of MBs. The bill data of tens of MBs to hundreds of MBs needs to be stored every time, thereby decreasing the speed of processing the bills and influencing the processing performance. In addition, frequent storage operations on the magnetic disk reduce the service life of the magnetic disk.

### SUMMARY OF THE INVENTION

Accordingly, embodiments of the present invention provide a method for storing a state of a buffer queue, which increases the speed of merging bills.

An embodiment of the present invention provides an apparatus for storing a state of a buffer queue, which increases the processing speed of merging bills.

An embodiment of the present invention provides a method for merging bills, which increases the processing speed of merging bills.

An embodiment of the present invention provides an apparatus for merging bills, which increases the processing speed of merging bills.

To attain the above object, the technical solution of the present invention is provided and the technical solution is described as follows:

A method for storing a state of a buffer queue includes:
storing a bill identifier, bill ID, pre-allocated to a bill newly added to a buffer queue in a bill ID queue when the bill exists; and
storing bill information of the bill newly added in a buffer queue as a temporary bill file, and storing the bill ID queue as an ID queue file.

A method for merging bills includes:
determining whether a bill group corresponding to the bills to be associated is found in a buffer queue, if no bill group corresponding to the bills to be associated is found, creating a new bill group for the bills, adding the new bill group and the bills to be associated to the buffer queue for waiting, allocating a bill ID, to each of the bills to be associated, storing the bill IDs in a bill ID queue; if the bill group corresponding to the bills to be associated is found, adding the bills to be associated to the bill group, and merging bills of the bill group if the bills of the bill group are complete; and
storing bill information of the bills to be associated as a temporary bill file, and storing the bill ID queue as an ID queue file.

A method for merging bills includes:
determining whether a bill group corresponding to the bills to be associated is found in a buffer queue, if no bill group corresponding to the bills to be associated is found, creating a new bill group for the bills to be associated, adding the new bill group and the bills to be associated to the buffer queue for waiting, allocating a bill ID, to each of the bills to be associated, storing the bill IDs in a bill ID queue; if the bill group corresponding to the bills to be associated is found, adding the bills to be associated to the bill group, and merging bills of the bill group if the bills of the bill group are complete; and
storing bill information of the bills to be associated as a temporary bill file, and storing the bill ID queue as an ID queue file.

An apparatus for merging bills includes: a search module, a creation module, an allocation module, a buffer module, a merging determination module, a merging module and a storage module, where
the search module is configured to determine whether a bill group corresponding to the bills to be associated is found in a buffer queue, send trigger information for creating a bill group to the creation module if the search module does not find a bill group corresponding to the bills to be associated in the buffer queue, and send trigger information for allocating bill identifiers, bill IDs, to the allocation module; or send trigger information for determination to the merging determination module if the search module finds a bill group corresponding to the bills to be associated in the buffer queue;
the creation module is configured to create a bill group corresponding to the bills when receiving the trigger information for creating a bill group, and add the bills and the bill group to the buffer queue of the buffer module;
the allocation module is configured to allocate bill IDs to the bills when receiving the trigger information for allocating bill IDs, and store the bill IDs in a bill ID queue of the buffer module;
the buffer module is configured to store the buffer queue and the bill ID queue, where the buffer queue includes a bill newly added to the buffer queue, the bill ID queue includes the bill IDs of bills of the buffer queue;
the merging determination module is configured to add the bills to the bill group corresponding to the bills to be associated when receiving the trigger information for determination, determine whether bills of the bill group are complete, send trigger information for merging bills to the merging module if the bills of the bill group are complete; if the bills of the bill group are incomplete, send trigger information for allocating bill IDs to the allocation module, and add the bills to the buffer queue of the buffer module;
the merging module is configured to merge the bills of the bill group when receiving the trigger information for merging bills; and
the storage module is configured to store bill information of the bills to be associated as a temporary bill file, and store the bill ID queue of the buffer module as an ID queue file.

According to the embodiments of the present invention, when the state of a buffer queue is stored in the permanent storage, only the bill ID queue of bills waiting in the buffer queue of the memory and the bills newly added to the buffer queue need to be stored. That is, the bills of the buffer queue do not need to be stored whenever a file including a plurality of bills is processed. This saves the time of storing the state of the buffer queue, increases the processing speed of merging bills, and improves the bill processing performance.

### BRIEF DESCRIPTION OF THE DRAWINGS

Figure 1 is a flow chart of a method for storing a state of a buffer queue according to an embodiment of the present invention;
Figure 2 is a flow chart of a method for merging bills according to an embodiment of the present invention;
Figure 3 is a schematic diagram of consistency of a buffer queue;
Figure 4 is a schematic diagram of restoring a buffer queue when a system is started;
Figure 5 is a structural diagram of an apparatus for storing a state of a buffer queue according to an embodiment of the present invention; and
Figure 6 is a structural diagram of an apparatus for merging bills according to an embodiment of the present invention.

### DETAILED DESCRIPTION OF THE INVENTION

The present invention is described in detail hereinafter with reference to the accompanying drawings and embodiments.

In a method for storing a state of a buffer queue according to an embodiment of the present invention, a bill identifier (ID) is allocated to each bill waiting in the buffer queue, a bill ID of a bill newly added to the buffer queue is stored in a bill ID queue, the bill information of the bill newly added to the buffer queue is stored as a temporary bill file, and the bill ID queue is stored as an ID queue file. Therefore, if a state of a buffer queue needs to be stored after a file including a plurality of bills is processed, a bill ID queue in the buffer queue is stored permanently, and the bill information of a bill newly added to the buffer queue is stored in a temporary bill file and thereby stored in a permanent storage medium.

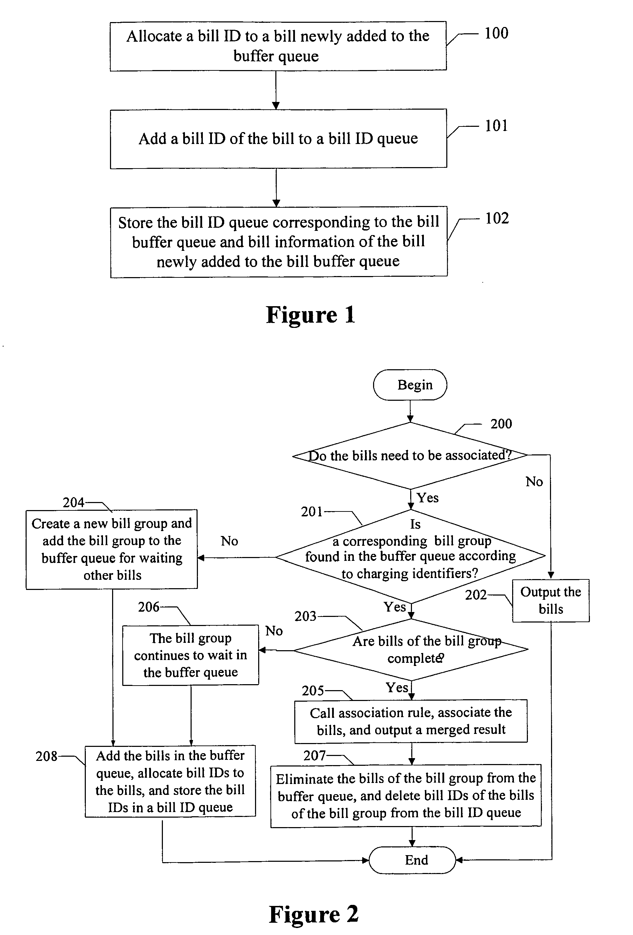

Figure 1 is a flow chart of a method for storing a state of a buffer queue according to an embodiment of the present invention. As illustrated in Figure 1, the method includes the following steps:
In step 100, a bill ID is allocated to a bill newly added to the buffer queue of a memory.

When a new bill to be associated is processed, if a bill group corresponding to the bill is not found in the buffer queue and a new bill group therefore needs to be created, the bill of the new bill group is added to the buffer queue, and then step 100 is carried out.

Or, if a bill group corresponding to the bill to be associated is found in the buffer queue, the bill is added to the bill group, and step 100 is carried out when the bill group needs to continue to wait.

In step 101, the bill ID of the bill is added to a bill ID queue of the memory.

In step 102, after a file including a plurality of bills is processed, the bill ID queue corresponding to the buffer queue stored in the memory is stored as an ID queue file, and bill information of the bill newly added to the buffer queue during the processing of the file is stored as a temporary bill file, e.g., stored in a magnetic disk.

After a file including a plurality of bills is processed, step 102 is carried out.

In step 102, a bill ID queue stored in a permanent storage is updated to the bill ID queue corresponding to bills in the current buffer queue, and the bill information of the bill newly added to the buffer queue during the processing of the file is stored as the temporary bill file. The bill information includes: a bill ID, a bill association operation information, a bill format, and a bill content. Therefore, after each processing of a file, only the bill ID queue which occupies a small storage space in the permanent storage needs to be updated and the bill information of the bill newly added to the buffer queue needs to be stored in the permanent storage. The buffer queue with a large capability does not need to be entirely stored every time. In this way, the time for processing bills is reduced.

After a bill group is associated and needs to be deleted from the buffer queue of the memory, bills of the bill group are eliminated from the buffer queue, all merged bills are deleted from the buffer queue, and bill IDs of the bills are deleted from the bill ID queue. After a file including a plurality of bills is processed, the ID queue file in the permanent storage is updated to the bill ID queue corresponding to bills of the current buffer queue, and a bill newly added to the buffer queue during the processing of the file is stored as a temporary bill file.

The following sections describe a procedure in detail, in which the method for storing a buffer queue according to the embodiment of the present invention is applied to bill emerging. Figure 2 is a flow chart of a method for merging bills according to an embodiment of the present invention. As illustrated in Figure 2, the method includes the following steps:

In step 200, it is determined whether bills need to be associated with each other, and step 201 is carried out if the bills need to be associated with each other. if the bills do not need to be associated with each other, step 202 is carried out.

Taking the association of GPRS and IMS bills as an example, in step 200, it is determined whether there is association information GCID in the IMS bill and whether there is association information ICID in the GPRS bill. If there is such association information, it indicates that the bills are bills that need to be associated with each other.

In step 201, a bill group is searched in a buffer queue according to the charging identifiers that are used as the association information. If the bill group is found, step 203 is carried out; if the bill group is not found, step 204 is carried out.

Bills in the bill group have associated charging identifiers, and keywords of the bill group are the charging identifiers of the bills. Therefore, in step 201, the searching of the corresponding bill group refers to searching for a bill group including the charging identifiers of the bills in the keywords.

In step 202, the bills are output, and the process of merging bills ends.

In step 203, the bills are added to the searched bill group, and it is determined whether the bills of the bill group are complete. If the bills of the bill group are complete, step 205 is carried out; if the bills of the bill group are incomplete, step 206 is carried out.

In step 203, the determining of whether the bills of the bill group are complete refers to determining whether bills corresponding to the keywords of the bill group are complete.

In step 204, a new bill group is created and added to the buffer queue, and waits for another bill. Then, step 208 is carried out.

In step 204, after the bill group is created, the charging identifiers of the bills and the associated charging identifier are added to the keywords of the bill group.

In step 205, the associated bills are merged and a merged bill is output, then step 207 is carried out.

In step 206, the bill group continues to wait in the buffer queue, and then step 208 is carried out.

In step 207, the bills of the bill group are eliminated from the buffer queue, the bill IDs of the bills of the bill group are deleted from the bill ID queue, and then the process of merging bills ends.

In step 208, the bill is added to the buffer queue, a bill ID is allocated to the bill, the bill ID is stored the bill ID queue, and then the process of merging bills ends.

After a file including a plurality of bills is processed according to the above flow, the ID queue file in the permanent storage is updated to a bill ID queue corresponding to bills of the current buffer queue, and a bill newly added to the buffer queue during the processing of the file is stored as a temporary bill file.

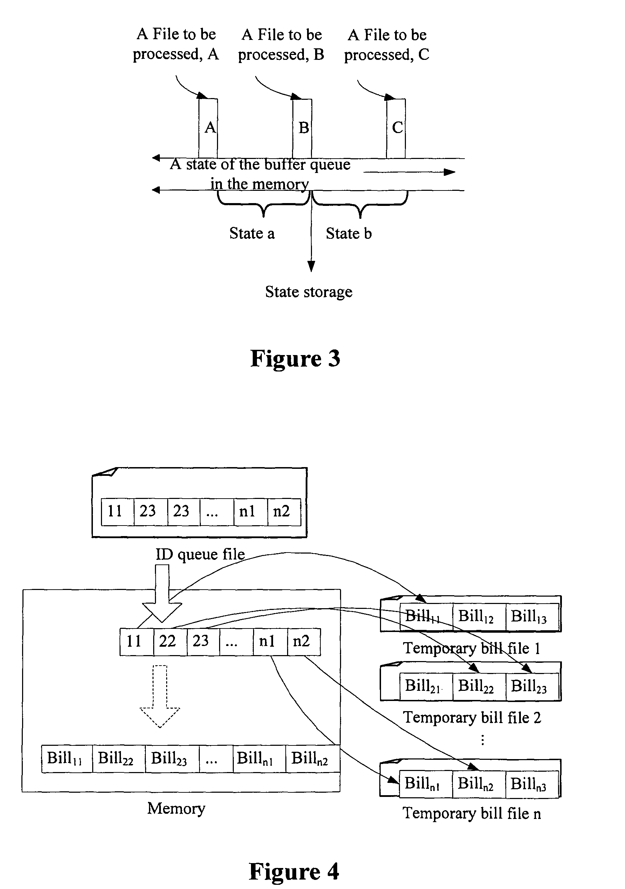

In the embodiment of the present invention, because the bill added to the buffer queue for waiting is stored and the bill ID queue corresponding to bills of the buffer queue of the memory is stored, the bill merging system can restore the state of the buffer queue completely, i.e., the consistency principle of the buffer queue is met, during the procedure for processing bills in case of a failure which may cause re-initiation of the system. Figure 3 is a schematic diagram of consistency of a buffer queue. As illustrated in Figure 3, after a file A is processed, the state of the buffer queue stored in the magnetic disk is marked as a. The next file to be processed is B, a program escapes abnormally after the file A is processed and before the file B is processed, and the state after the processing of the file A, i.e., the state a, is restored in the magnetic disk when a next restoration is started. The system continues to process the file B. Therefore, the case in which bills are lost or repeated is avoided. If the system escapes during the processing of the file B, the state of the buffer queue in the magnetic disk is still a at this time. The state after the processing of the file A, i.e., the state a, is restored in the magnetic disk when a next restoration is started. The processing of the file B is not completed and the file B is therefore processed again. Therefore, the case in which bills are lost or repeated is avoided.

A procedure for restoring the buffer queue when the system is started is described in detail.

When being started, the system reads from the magnetic disk the ID queue file stored before a last escaping of the system, restores the bill ID queue corresponding to the buffer queue in the memory before the last escaping of the system; the system scans all temporary bill files, e.g., reads bill information of each bill from the temporary bill files, the bill information including a bill ID, bill association operation information, a bill format and bill content; then, the system determines whether bills in the temporary bill files need to enter the buffer queue. If the bill ID of a bill exists in the bill ID queue, it indicates that the bill is still waiting in the buffer queue before the failure of the system, the system determines that the bill needs to enter the buffer queue and restores the bill into the buffer queue; if the bill ID of the bill does not exist in the bill ID queue, the system determines that the bill has been processed and does not need to enter the buffer queue.

A bill is deleted from the buffer queue of the memory after the processing of the bill is complete, and accordingly the bill ID of the bill is deleted from the bill ID queue and the bill ID queue is stored as an ID queue file. Therefore, bills corresponding to the bill IDs stored in the ID queue file are still the bills waiting in the buffer queue.

Figure 4 is a schematic diagram of restoring a buffer queue when a system is started. As illustrated in Figure 4, bill IDs stored in an ID queue file are 11, 22, 23, n1, n2, etc. When the buffer queue is restored according to the ID queue file, only bills with the IDs 11, 22, 23, n1 and n2 stored in a temporary bill file are restored. Other bills that are stored in the temporary bill file but corresponding bill IDs of which are not stored in the ID queue file are bills that have been processed and deleted from the buffer queue.

In a procedure for processing bills, if a bill on a device becomes abnormal, e.g., a device for generating the bill fails, bill groups related with the device and whose merging is uncompleted cannot be merged normally. If the bill groups are not eliminated, the bill groups keep waiting in the buffer queue. Accordingly, an embodiment of the present invention may further include eliminating the buffer queue periodically, which includes: scanning the buffer queue periodically, performing timeout determination on each bill group, and if the bill group does not time out, the bill group continuing to wait in the buffer queue; if the bill group has time out, outputting all the bills in the bill group in their original formats, deleting the bill group from the buffer queue, and deleting bill IDs of all the bills in the bill group from the bill ID queue. The method for performing the timeout determination on the bill groups is the conventional art, which is not repeated here.

In an embodiment of the present invention, the method for storing a state of a buffer queue may further include: creating a temporary file list in the memory and the temporary file list recording the number of bills of each temporary bill file in the buffer queue. In a procedure for processing a file including a plurality of bills, the number of bills of the file in the temporary bill file list is increased by 1 if one bill ID is added to the bill ID queue, and the number of bills of the file in the temporary bill file list is decreased by 1 if one bill ID is deleted from the bill ID queue, i.e., a bill is deleted from the buffer queue, whenever a bill is processed and the state of the buffer queue is modified. When a file received thereafter is processed, if a bill of the stored temporary bill file is deleted, a bill ID of the bill in the bill ID queue does not exist. In this case, the number of bills of the temporary bill file stored in the temporary file list is decreased by 1, and if it is detected that the number of bills of the temporary bill file in the temporary file list is 0, it indicates that the temporary bill file does not include any bill waiting in the buffer queue of the memory. In addition, because the bill is output to a downlink bill processing system for processing after the bill is processed in the bill merging system and the temporary bill file stored in the bill merging system serves no purpose, therefore, the temporary bill file is deleted. This avoids the problem of excessive temporary bill files.

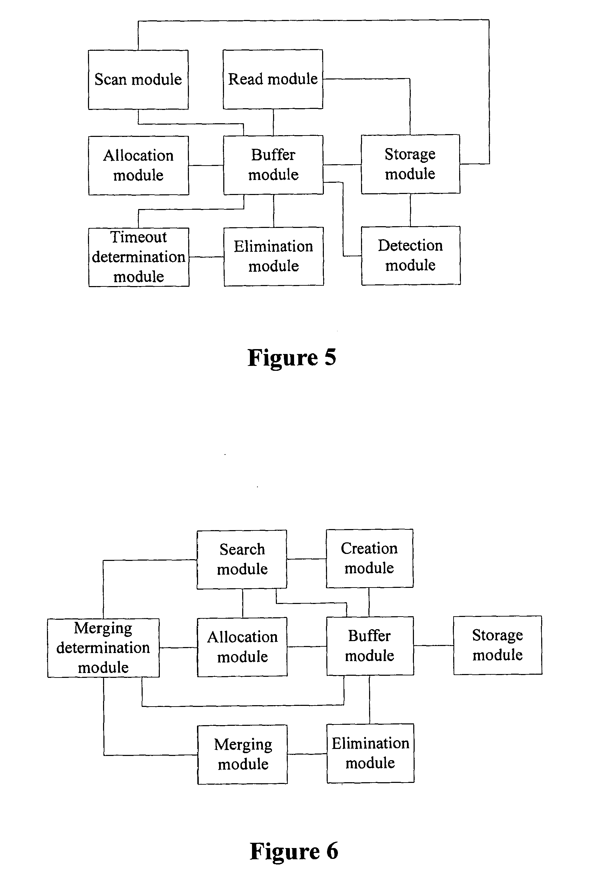

Figure 5 is a structural diagram of an apparatus for storing a state of a buffer queue according to an embodiment of the present invention. As illustrated in Figure 5, the apparatus includes an allocation module, a buffer module and a storage module.

The allocation module is configured to allocate a bill ID to each bill waiting in a buffer queue of the buffer module.

The buffer module is configured to store the buffer queue and a bill ID queue, the buffer queue including a bill newly added to the buffer queue, the bill ID queue including bill IDs of bills of the buffer queue.

The storage module is configured to store bill information of the bill newly added to the buffer queue of the buffer module as a temporary bill file, and store the bill ID queue of the buffer module as an ID queue file.

The apparatus for storing a state of a buffer queue according to the embodiment of the present invention further includes an elimination module configured to eliminate a bill needing to be eliminated from the buffer queue of the buffer module and eliminate a bill ID of the bill needing to be eliminated from the bill ID queue of the buffer module.

Furthermore, the buffer queue of the buffer module further stores a temporary file list, where the temporary file is configured to store the number of remaining bills of the temporary bill file of the storage module in the buffer queue. Correspondingly, the apparatus may further include a detection module, where the detection module is configured to delete the temporary bill file from the storage module if the detection module detects that the number of bills of the temporary bill file in the temporary file list is 0.

The apparatus for storing a state of a buffer queue according to the embodiment of the present invention may further include: a read module configured to read the ID queue file of the storage module and restore the bill ID queue to the buffer queue of the buffer module when the system is restarted; and a scan module configured to scan the temporary bill file of the storage module, determine whether bills in the temporary bill file need to enter the buffer queue according to the bill ID queue and bill IDs in the temporary bill file, and restore the bills to the buffer queue if the bills in the temporary bill file need to enter the buffer queue.

The bills waiting in the buffer queue of the buffer module are bills waiting in bill groups of the buffer queue. Further, the apparatus further includes a determination module, configured to perform a timeout determination on each bill group of the buffer queue, and send a trigger signal for eliminating the bill group to the elimination module if the bill group times out. Correspondingly, the elimination module outputs the bill group on receiving the trigger signal, eliminates the bill group from the buffer queue of the buffer module, and eliminates bill IDs of bills of the bill group from the bill ID queue of the buffer module.

Figure 6 is a structural diagram of an apparatus for merging bills according to an embodiment of the present invention. As illustrated in Figure 6, the apparatus includes a search module, a creation module, an allocation module, a buffer module, a merging determination module, a merging module, and a storage module.

The search module is configured to determine whether a bill group corresponding to bills to be associated is found in a buffer queue. The search module sends trigger information for creating a bill group to the creation module and sends trigger information for allocating bill IDs to the allocation module if the search module does not find a bill group corresponding to the bills to be associated in the buffer queue; and sends trigger information for determination to the merging determination module if the search module finds a bill group corresponding to the bills to be associated in the buffer queue.

The creation module is configured to create a bill group corresponding to the bills on receiving the trigger information for creating a bill group, and add the bills and the corresponding bill group to the buffer queue of the buffer module.

The allocation module is configured to allocate bill IDs to the bills on receiving the trigger information for allocating a bill ID, and store the bill ID in a bill ID queue of the buffer module.

The buffer module is configured to store the buffer queue and the bill ID queue, the buffer queue including a bill newly added to the buffer queue, the bill ID queue including bill IDs of bills of the buffer queue.

The merging determination module is configured to add the bills to the corresponding bill group on receiving the trigger information for determination, determine whether bills of the bill group are complete, send trigger information for merging bills to the merging module if the bills of the bill group are complete; otherwise, send trigger information for allocating bill IDs to the allocation module and add bills to the buffer queue of the buffer module.

The merging module is configured to merge the bills of the bill group on receiving the trigger information for merging bills.

The storage module is configured to store bill information of the bill newly added to the buffer queue of the buffer module as a temporary bill file, and store the bill ID queue of the buffer module as an ID queue file.

The apparatus may further include an elimination module. The elimination module is configured to eliminate merged bills of the bill group from the buffer queue of the buffer module and eliminate bill IDs of the merged bills of the bill group from the bill ID queue of the buffer module.

As can be seen from the above, the technical solution of the embodiments of the present invention updates the permanently stored ID queue file to a bill ID queue of bills currently waiting in the buffer queue when a file including a plurality of bills is processed, and stores the bill newly added to the buffer queue in the permanent storage but does not store all bills in the whole buffer queue again, thereby reducing the time for storing the state of the buffer queue and increasing the speed of processing bills. Also, write operations on the magnetic disk are reduced greatly, and the damage to the magnetic disk and the Input/Output (I/O) interface of the magnetic disk is reduced.

In addition, according to the technical solution of the present invention, when the system failure is resolved and restarted to restore the buffer queue, the buffer queue in the memory is restored according to the stored bill ID and temporary bill file, so that any bill is not lost and any repeated bill is not generated in the procedure for processing bills.

The above description is merely for preferred embodiments of the present invention and is not used to limit the protection scope of the present invention. Any variations, equivalents and modifications within the spirit and principle of the present invention shall fall into the protection scope of the present invention.

## Claims

1. A method for storing a state of a buffer queue, **characterized by** comprising:
storing a bill identifier, bill ID, pre-allocated to a bill newly added to the buffer queue in a bill ID queue when the bill exists; and
storing bill information of the bill newly added to the buffer queue as a temporary bill file, and storing the bill ID queue as an ID queue file.

2. The method according to claim 1, further comprising:
eliminating the bill from the buffer queue; and
deleting the bill ID of the bill from the bill ID queue.

3. The method according to claim 2, wherein bill information comprises a bill ID, and the method further comprises:
restoring the bill ID queue by reading the ID queue file when a system of processing the bill is restarted; and
scanning the stored temporary bill file, and restoring the bill to the buffer queue if it is determined that the bill in the temporary bill file needs to enter the buffer queue according to the bill ID queue and the bill ID in the temporary bill file.

4. The method according to claim 2, wherein before eliminating the bill from the buffer queue, the method further comprises:
performing timeout determination on each bill group in the buffer queue by scanning the buffer queue, and outputting all the bills of the bill group if the bill group times out; and
the process of eliminating the bill from the buffer queue comprises: eliminating all the output bills of the bill group from the buffer queue.

5. The method according to claim 1, further comprising:
creating a temporary file list configured to store the number of remaining bills of the temporary bill file in the buffer queue; and
deleting the temporary bill file if it is detected that the number of remaining bills of the temporary bill file in the temporary file list is 0.

6. The method according to claim 1, wherein the bill information comprises a bill ID, a bill association operation information, a bill format, and a bill content.

7. A method for merging bills, **characterized by** comprising:
determining whether a bill group corresponding to the bills to be associated is found in a buffer queue, if the bill group corresponding to the bills to be associated is not found, creating a new bill group for the bills to be associated, adding the new bill group and the bills to be associated to the buffer queue for waiting, allocating a bill identifier, bill ID, to each of the bills to be associated, storing the bill IDs in a bill ID queue; if the bill group corresponding to the bills to be associated is found, adding the bills to be associated to the bill group, and merging bills of the bill group if the bills of the bill group are complete; and
storing bill information of the bills to be associated as a temporary bill file, and storing the bill ID queue as an ID queue file.

8. The method according to claim 7, further comprising:
eliminating the merged bills of the bill group from the buffer queue; and deleting bill IDs of the bills of the bill group from the bill ID queue.

9. The method according to claim 8, wherein the bill information comprises a bill ID, and the method further comprises:
restoring the bill ID queue by reading the ID queue file when a system of processing bills is restarted; and
scanning the stored temporary bill file, and restoring the bills to the buffer queue if it is determined that bills in the temporary bill file need to enter the buffer queue according to the bill ID queue and bill IDs in the temporary bill file.

10. An apparatus for storing a state of a buffer queue, **characterized by** comprising an allocation module, a buffer module, and a storage module, wherein
the allocation module is configured to pre-allocate a bill identifier, bill ID, to each bill waiting in a buffer queue of the buffer module;
the buffer module is configured to store the buffer queue and a bill ID queue, wherein the buffer queue comprises a bill newly added to the buffer queue, the bill ID queue comprises bill IDs of bills of the buffer queue; and
the storage module is configured to store bill information of the bill newly added to the buffer queue of the buffer module as a temporary bill file, and store the bill ID queue of the buffer module as an ID queue file.

11. The apparatus according to claim 10, further comprising an elimination module, configured to eliminate the bills from the buffer queue of the buffer module and eliminate bill IDs of the bills from the bill ID queue of the buffer module.

12. The apparatus according to claim 11, further comprising:
a read module, configured to restore the bill ID queue to the buffer queue by reading the ID queue file of the storage module when a system of processing bills is restarted; and
a scan module, configured to scan the temporary bill file of the storage module, restore the bills to the buffer queue determine if it is determined that bills in the temporary bill file need to enter the buffer queue according to the bill ID queue and bill IDs in the temporary bill file.

13. The apparatus according to claim 11, further comprising a timeout determination module, configured to perform a timeout determination on each bill group of each buffer queue by scanning the buffer queue, and send a trigger signal for eliminating the bill group to the elimination module if the bill group times out;
wherein the elimination module is further configured to output all the bills of the bill group when receiving the trigger signal for eliminating the bill group, eliminate all the bills from the buffer queue of the buffer module, and eliminate bill IDs of all the bills from the bill ID queue of the buffer module.

14. The apparatus according to claim 10, wherein the buffer module is further configured to store a pre-created temporary file list configured to store the number of remaining bills of the temporary bill file in the buffer queue;
the apparatus further comprises a detection module, configured to delete the temporary bill file from the storage module if the detection module detects that the number of remaining bills of the temporary bill file in the temporary file list is 0.

15. An apparatus for merging bills, **characterized by** comprising a search module, a creation module, an allocation module, a buffer module, a merging determination module, a merging module, and a storage module, wherein
the search module is configured to determine whether a bill group corresponding to bills to be associated is found in a buffer queue, send trigger information for creating a bill group to the creation module if the search module does not find a bill group corresponding to the bills to be associated in the buffer queue, and send trigger information for allocating bill identifiers, bill IDs, to the allocation module; or send trigger information for determination to the merging determination module if the search module finds a bill group corresponding to the bills to be associated in the buffer queue;
the creation module is configured to create a bill group corresponding to the bills when receiving the trigger information for creating a bill group, and add the bills and the corresponding bill group to the buffer queue of the buffer module;
the allocation module is configured to allocate bill IDs to the bills when receiving the trigger information for allocating bill IDs, and store the bill IDs in a bill ID queue of the buffer module;
the buffer module is configured to store the buffer queue and the bill ID queue, wherein the buffer queue comprises a bill newly added to the buffer queue, the bill ID queue comprising bill IDs of bills of the buffer queue;
the merging determination module is configured to add the bills to the corresponding bill group on receiving the trigger information for determination, determine whether bills of the bill group are complete, send trigger information for merging bills to the merging module if the bills of the bill group are complete; if the bills of the bill group are incomplete, send trigger information for allocating bill IDs to the allocation module, and add the bills to the buffer queue of the buffer module;
the merging module is configured to merge the bills of the bill group when receiving the trigger information for merging bills; and
the storage module is configured to store bill information of the bills to be associated as a temporary bill file, and store the bill ID queue of the buffer module as an ID queue file.

16. The apparatus according to claim 15, further comprising an elimination module, configured to eliminate merged bills of the bill group from the buffer queue of the buffer module and eliminate bill IDs of the merged bills of the bill group from the bill ID queue of the buffer module.

17. The apparatus according to claim 16, further comprising:
a read module, configured to restore the bill ID queue to the buffer queue by reading the ID queue file of the storage module when a system for processing the bills is restarted; and
a scan module configured to scan the temporary bill file of the storage module, and if it is determined that bills in the temporary bill file need to enter the buffer queue according to the bill ID queue and bill IDs in the temporary bill file, restore the bills to the buffer queue.
